# EUROPÄISCHE PATENTANMELDUNG

(11) **EP 2 853 774 A1**
(43) Veröffentlichungstag der Anmeldung: **01.04.2015**
(21) Anmeldenummer: 14003303.6
(22) Anmeldetag: 24.09.2014
(51) Int. Cl.: F16H 25/20, F42B 10/64, F16H 25/22

(54) **Spindelaktuator**

(30) Priorität: 25.09.2013 DE 102013015951
(71) Anmelder: Diehl BGT Defence GmbH & Co. Kg, 88662 Überlingen (DE)
(72) Erfinder: Kempas, Hagen, DE - 88662 Überlingen (DE)
(74) Vertreter: Diehl Patentabteilung

(57) **Zusammenfassung**

Die Erfindung geht aus von einem Spindelaktuator (14) mit einem Gehäuse (30), einem Motor (66), einer axial beweglichen Spindel (46) und einer axial gehäusefesten Spindelmutter (50).

Gemäß der Erfindung kann eine kompakte Bauform und ein starker und präziser Antrieb dadurch erreicht werden, dass der Motor (66) ein einen Innenraum (68, 70) bildender Hohlwellenmotor ist und die Spindel (46) in den Innenraum (68, 70) einfahrbar ist.

## Beschreibung

Die Erfindung betrifft einen Spindelaktuator mit einem Gehäuse, einem Motor, einer axialbeweglichen Spindel und einer axialgehäusefesten Spindelmutter.

Lenkflugkörper sind mit einem Lenksystem mit mehreren Rudern bzw. Lenkflügeln ausgestattet. Die Ruder werden über Aktuatoren angesteuert, die wiederum von einer Steuereinheit gesteuert werden, die auf diese Weise den Lenkflug des Lenkflugkörpers steuert. Da Lenkflugkörper mit hohen Geschwindigkeiten fliegen, bewirken schon kleine Veränderungen der Ruderstellung hohe Lenkkräfte, sodass zur präzisen Flugsteuerung exakt arbeitende Aktuatoren eingesetzt werden sollten.

Besondern geeignet für eine Rudersteuerung für einen Lenkflugkörper sind Spindelaktuatoren, die eine um eine Spindelachse drehbare Spindel mit einem Gewinde aufweisen. Am Gewinde läuft eine Spindelmutter, die durch eine Drehbewegung der Spindel auf- beziehungsweise abläuft.

In einem Lenkflugkörper - oder auch in einer anderen Anwendung - steht oftmals nicht beliebig viel Bauraum zur Verfügung, sodass eine kompakte Bauweise eines Spindelaktuators wünschenswert ist.

Es ist insofern eine Aufgabe der vorliegenden Erfindung, einen kompakt bauenden Spindelaktuator bereit zu stellen.

Diese Aufgabe wird durch einen Spindelaktuator der eingangs genannten Art gelöst, bei dem der Motor ein einen Innenraum bildender Hohiwellenmotor ist und die Spindel in den Innenraum einfahrbar ist. Hierdurch kann die Länge des Innenraums, oder zumindest ein Teil davon, für eine axiale Bewegung der Spindel und damit für einen Spindelhub verwendet werden, sodass bei kompakter Bauweise ein relativ zur Baugröße des Spindelaktuators großer Spindelhub erreichbar ist, beziehungsweise eine kompakte Bauweise bei vergleichsweise großem Spindelhub erzielt werden kann.

Der Hub des Spindelaktuators entsteht durch die Bewegung der axialbeweglichen Spindel in Axialrichtung. Die Spindel ist also in Axialrichtung beweglich gelagert. Sie ist jedoch zweckmäßigerweise in einer Rotation um ihre Spindelachse blockiert, sodass sie zwar axial beweglich, rotatorisch jedoch arretiert ist. Die Axialbewegung der Spindel wird durch eine Rotation der axial gehäusefesten Spindelmutter um die Spindelachse bewirkt. Die Spindelmutter ist zwar axial unbeweglich im Gehäuse gelagert, ist jedoch drehbar um die Spindelachse, so dass ihre Drehung die Spindel axial antreibt. Die Spindelmutter ist vorteilhafterweise mit dem Läufer des Motors starr verbunden und wird von diesem zur Bewirkung eines Spindelhubs rotatorisch angetrieben.

Die Spindelmutter ist zweckmäßigerweise mit dem Läufer des Motors verbunden, wobei der Ständer des Motors vorteilhafterweise gehäusefest angeordnet ist. Im eingefahrenen Zustand der Spindel ist die Spindel teilweise im Innenraum des Hohlwellenmotors angeordnet. Zum Bewirken eines Hubs kann die Spindel aus dem Innenraum zumindest teilweise herausgefahren werden. Der Motor ist um den Innenraum herum angeordnet, insbesondere symmetrisch um die Spindelachse herum. Der Innenraum kann hierbei durch ein Läufergehäuse gebildet sein, das den Läufer nach innen begrenzt.

Unter einem Aktuator kann eine Einheit verstanden werden, die elektrische Steuersignale in eine Bewegung eines Ansteuerelements umsetzt, sodass diese Bewegung für eine Steuerung eines anderen Elements genutzt werden kann, beispielsweise ein Ruder eines Lenkflugkörpers. Die Bewegung des Ansteuerelements, beispielsweise eine Schubstange, ist hierbei zweckmäßigerweise eine translatorische Bewegung, also eine eindimensionale geradlinige Bewegung. Weiter ist die Bewegung vorteilhafterweise eine Linearbewegung, sodass zwei gleiche Ansteuersignale unabhängig von der Stellung des Ansteuereiements in die quantitativ gleiche translatorische Bewegung umgesetzt werden. Dies gilt zweckmäßigerweise für alle Positionen des Ansteuerelements zwischen seinen Bewegungsgrenzen.

Unter einem Spindelaktuator kann ein Aktuator verstanden werden, dessen Ansteuerelement spindelgetrieben ist. Insofern umfasst er eine Spindel, die ein ein-oder mehrgängiges Gewinde zum direkten oder indirekten Eingriff in eine Spindelmutter hat. Die Spindel kann einstückig mit einem Ansteuerelement, beispielsweise einer Schubstange, ausgeführt sein oder kann mit dem Ansteuerelement starr verbunden sein. Das Ansteuerelement kann in diesem Zusammenhang auch als Element der Spindel bezeichnet werden.

Zweckmäßigerweise ist die Spindelmutter eine Kugelumlaufmutter, sodass also sowohl die Spindel als auch die Spindelmutter Kugelbahnen aufweisen, in denen Kugeln laufen, die sowohl in das Außengewinde der Spindel als auch in das Innengewinde der Spindelmutter eingreifen, sodass Spindel und Spindelmutter über die Kugeln ineinander eingreifen.

Das Gehäuse schließt den Spindelaktuator zweckmäßigerweise nach außen ab, insbesondere allseitig, mit der Ausnahme, dass ein an der Spindel befestigtes Ansteuerelement, beispielsweise eine Schubstange, aus dem Gehäuse herausragen kann. Hierfür umfasst das Gehäuse zweckmäßigerweise eine Öffnung, durch die das Ansteuerelement hindurchgeführt ist. Das Gehäuse kann zylinderförmig ausgeführt sein mit einem Zylinderteil und zwei Deckeln, die am Zylinderteil befestigt sind.

Der Motor ist ein Elektromotor, zweckmäßigerweise ein bürstenloser Gleichstrommotor, der ein Synchronmotor sein kann, insbesondere ein permanent erregter Gleichstrommotor. Der Motor ist mit zumindest einer Motoreinheit ausgeführt, die einen gehäusefesten Ständer und einen zum Ständer drehbaren Läufer aufweist. Der Ständer ist zweckmäßigerweise radial außerhalb des Läufers und um diesen herum angeordnet. Innerhalb des innen liegenden Läufers liegt der Innenraum, der ein Hohlraum ist. Der Innenraum kann durch ein Läufergehäuse nach radial außen begrenzt sein. Der Motor hat zumindest einen Läufer, der mit der Spindelmutter zu dessen Antrieb fest verbunden ist. Der Läufer kann hierbei außen um die Spindelmutter herum oder seitlich von der Spindelmutter angeordnet sein, wobei Läufer und Spindelmutter zweckmäßigerweise unbeweglich miteinander verbunden sind.

In einer vorteilhaften Ausführungsform der Erfindung ist die Spindelmutter innerhalb des Gehäuses angeordnet. Hierdurch kann diese besonders gut gegen Verschmutzung geschützt werden, sodass ein langer störungsfreier Betrieb des Spindelaktuators erreichbar ist. Vorteilhafterweise ist die Spindelmutter vollständig vom Gehäuse umschlossen, zweckmäßigerweise staubdicht, wodurch ein besonders robuster Spindelaktuator erreichbar ist.

Eine weitere vorteilhafte Ausgestaltung der Erfindung sieht vor, dass das Gehäuse eine nach außen abgeschlossene Einheit bildet mit einer Öffnung, durch die ein an der Spindel befestigtes Ansteuerelement, beispielsweise eine Schubstange, geführt ist, die die Öffnung staubdicht abdichtet. Hierdurch kann das Gehäuse als die in ihm liegenden Bauteile abschirmende Einheit ausgeführt werden, die die Bauelemente durch die staubdichte Abdichtung gegen Verschleiß verursachende Einflüsse abschirmt.

Vorteilhafterweise umfasst der Motor zwei Motoreinheiten mit jeweils einem gehäusefesten Ständer und einem rotierbaren Läufer, wobei beide Läufer zweckmäßigerweise starr mit der Spindelmutter verbunden sind. Hierdurch kann diese besonders symmetrisch und hierdurch verschleißarm mit Drehmoment beaufschlagt werden. Zweckmäßigerweise sind die Motoreinheiten gleich ausgeführt, wobei es sich um völlig gleiche Motoreinheiten handeln kann, gegebenenfalls bis auf eine spiegelsymmetrische Abweichung.

Weiter ist es vorteilhaft, wenn die Spindelmutter axial zwischen den beiden Motoreinheiten angeordnet ist. Hierdurch kann eine besonders gute Bauraumausnutzung erreicht und der Spindelaktuator besonders kompakt ausgeführt werden. Zweckmäßigerweise ist die Spindelmutter symmetrisch zwischen den Motoreinheiten angeordnet. Ein an mechanischen Spannungen armer Antrieb der Spindelmutter kann erreicht werden, wenn die Massenverteilung der Läufer der beiden Motoreinheiten symmetrisch zur Spindelmutter ist.

Die Spindelmutter ist relativ zum Gehäuse rotierbar gelagert und ist hierfür zweckmäßigerweise von einem Spindellager gelagert. Dieses kann eine oder mehrere Lagereinheiten aufweisen, das oder die zweckmäßigerweise radial außerhalb der Spindelmutter angeordnet ist beziehungsweise sind, insbesondere direkt radial außerhalb, also in Radialrichtung von der Spindelmutter. Ein besonders kompakter Aufbau kann erreicht werden, wenn die beiden Motoreinheiten mit dem Spindellager einen Tubus um die Spindel bilden. Das Spindellager ist hierbei also zumindest überwiegend in gleicher radialer Lage wie die beiden Motoreinheiten, sodass das Spindellager und die beiden Motoreinheiten axial hintereinander angeordnet sind. Zweckmäßigerweise liegt das Spindellager mittig zwischen den beiden Motoreinheiten.

Vorteilhafterweise sind beide Motoreinheiten Hohlwelleneinheiten. Hierdurch kann ermöglicht werden, dass die Spindel durch beide von den Hohlwelleneinheiten gebildeten Innenräume hindurchführbar ist. Hierbei kann die Spindel - und/oder eine andere befestigte oder einstückig mit ihr verbundene Schubstange - stets durch den Hohlraum der vorderen Motoreinheit verlaufen und je nach Spindelhub mehr oder weniger tief in den Hohlraum der hinteren Motoreinheit hineinreichen.

Weiter ist es vorteilhaft, wenn die Spindelmutter von radial außerhalb von einem Tubus, insbesondere axial und radial, gehalten ist, der ein Innengehäuse eines Läufers des Motors bildet. Der Tubus kann ein- oder mehrteilig ausgeführt sein, wobei eine mehrteilige Ausführung vorteilhaft für eine einfache Montage des Spindelaktuators ist.

Das Ansteuerelement des Spindelaktuators ist dazu ausgeführt, an einem Anlenkelement, beispielsweise einen Flügel eines Lenksystems, befestigt zu werden. Wird das Anlenkelement hierbei rotatorisch bewegt, so ist mit dieser rotatorischen Bewegung in der Regel auch ein Verkippen des Spindelaktuators bei einer Hubbewegung der Spindel verbunden. Dieses Verkippen sollte so sein, dass es möglichst wenig mechanische Spannung zwischen Spindelmutter und Spindel erzeugt. Eine solche spannungsarme Lagerung der Spindel relativ zur Spindelmutter kann begünstigt werden, wenn die Spindelmutter in einem Spindellager gelagert ist, das als X-Lager ausgeführt ist. Hierdurch kann die Spindel in ihrer Axialrichtung, und damit auch die Spindelmutter, verkippt werden, ohne dass ein großes mechanisches Moment vom Spindellager auf die Spindelmutter ausgeübt wird. Es ist auch bei einem solchen Verkippen eine spannungsarme Rotation der Spindel um ihre Achse und damit eine transversale Bewegung des Ansteuerelements möglich.

Das Spindellager hat vorteilhafterweise zwei Lagereinheiten, die vorteilhafterweise nebeneinander angeordnet sind und beide die Spindelmutter lagern. Vorteilhafterweise sind die Lagereinheiten jeweils als Schrägschulterlager ausgeführt, wobei eine Anordnung de beiden Lagereinheiten als X-Lager vorteilhaft ist.

Einer Verkippung der Spindel in ihrer Axialrichtung kann außerdem entgegengewirkt werden, wenn die Spindel vorne eine Schubstange aufweist, die in einem Gleitlager durch das Gehäuse geführt ist. Das Gleitlager kann Verkippmomente auffangen, sodass die Spindel innerhalb des Gehäuses weitgehend verkippfrei bleibt. Das Gleitlager ermöglicht zweckmäßigerweise eine axial bewegliche und radial gehaltene Lagerung. Spindel und Schubstange können einteilig oder mehrteilig ausgeführt sein.

Der Spindelaktuator kann in einer Aktionseinheit gelagert sein, beispielsweise einem Lenksystem eines Lenkflugkörpers. Für eine solche Lagerung umfasst er zweckmäßigerweise ein oder mehrere Befestigungsmittel, die als Ausformungen und/oder Ausnehmungen ausgeführt sein können. Besonders vorteilhaft ist das Befestigungsmittel als Bolzen oder Zapfen ausgeführt, da hierdurch eine rotierbare Lagerung erreicht werden kann. Einem momentarmen Verkippen ist es zuträglich, wenn das Befestigungsmittel in einem axialen Abstand zur Spindelmutter von maximal 25 % der Gehäuselänge angeordnet ist. Durch eine solche Lagerung des Spindelaktuators nahe der Spindelmutter kann das Verkippmoment auf die Spindelmutter bei einem Verkippen des Spindelaktuators gering gehalten werden. Besonders vorteilhaft ist ein axialer Abstand von maximal 10 % der Gehäuselänge, wobei eine Anordnung direkt radial außerhalb der Spindelmutter am besten ist.

Außerdem ist es vorteilhaft wenn das Befestigungsmittel axial zwischen den beiden Motoreinheiten angeordnet ist. Hierdurch kann erreicht werden, dass eine thermische Ausdehnung der Motoreinheiten nur einen geringen oder keinen Einfluss auf die Spindelposition beziehungsweise die Position der Spindelmutter relativ zum Befestigungsmittel in axialer Richtung hat. Die axiale Position der Spindelmutter kann hierdurch sehr genau gehalten werden, auch wenn die Motoreinheiten erhitzt sind.

Des Weiteren wird vorgeschlagen, dass das Befestigungsmittel axial in Höhe einer nach innen ragenden Gehäuseversteifung angeordnet ist. Eine solche Gehäuseversteifung kann eine Innenrippe sein. Besonders vorteilhaft ist das Befestigungsmittel als nach außen ragende Verlängerung der Versteifung ausgeführt. Bei allen diesen Möglichkeiten kann eine besonders steife und stabile Lagerung des Spindelaktuators an oder in der Aktionseinheit erreicht werden. Zweckmäßigerweise ist das Befestigungsmittel als Teil eines Drehlagers ausgeführt, sodass der Spindelaktuator im Drehlager drehbar ist. Zweckmäßigerweise ist die Rotationsachse des Drehlagers senkrecht zur Spindelachse.

Zur Bestimmung der Position der Spindel ist ein Positionssensor sinnvoll, der eine Rotationsstellung der Spindel relativ zum Gehäuse bestimmen kann. Hierzu kann am Umfang der Spindelmutter oder eines anderen mit der Spindelmutter rotierenden Elements ein Winkelgeber angeordnet sein, beispielsweise in Form einer optischen oder mechanischen Markierung. Diese Markierung wird von radial außen abgetastet. Eine besonders platzsparende Drehwinkelerkennung kann erreicht werden, wenn ein Rotationssensor in der Spindelachse positioniert ist.

Besonders vorteilhaft ist, wenn der Innenraum von einem Läufergehäuse des Motors umgeben ist und der Rotationssensor am axial hinteren Ende des Läufergehäuses befestigt ist. Hierbei ist zweckmäßigerweise nur der rotierende Teil des Sensors, beispielsweise ein Magnetwinkelgeber, am Läufergehäuse befestigt. Der andere Teil des Sensors ist zweckmäßigerweise gehäusefest angeordnet. Besonders vorteilhaft ist eine Anordnung ebenfalls in der Spindelachse und gegenüber dem rotierenden Teil des Sensors. Der stationäre beziehungsweise gehäusefeste Teil des Rotationssensors kann ein Winkelabtaster sein.

Der oben beschriebene Spindelaktuator kann in einer Vielzahl von Anwendungen zum Einsatz kommen. Generell vorteilhaft ist ein Einsatz, bei dem ein relativ kleiner Hub benötigt ist, der jedoch sehr exakt gesteuert werden muss. Anwendungen in Luft- oder bodengebundenen Fahrzeugen sind ebenso denkbar und vorteilhaft wie im Geräteoder Anlagenbau. Besonders vorteilhaft ist die Anwendung des Spindelaktuators in einem Lenkflugkörper. Insofern ist die Erfindung auch gerichtet auf einen Lenkflugkörper mit einem Lenksystem mit einem Lenkflügel bzw. Ruder und einem Betätigungsmechanismus zum Bewegen des Ruders. Es wird vorgeschlagen, dass der Betätigungsmechanismus erfindungsgemäß einen wie oben beschriebenen Spindelaktuator aufweist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit der erfindungsgemäßen Vorrichtung kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine schematische Darstellung eines Lenkflugkörpers,
- FIG 2: einen Spindelaktuator an einer Achse eines Lenkflügels des Lenkflugkörpers aus FIG 1,
- FIG 3: einen Längsschnitt durch den Spindelaktuator aus FIG 2 mit zwei Motoreinheiten,
- FIG 4: jeweils einen Querschnitt durch die beiden Motoreinheiten,
- FIG 5: eine perspektivische Sicht auf einen Ständer einer der Motoreinheiten mit Einzelpolwicklungen,
- FIG 6: eine perspektivische Darstellung auf eine Mäanderwicklung und
- FIG 7: eine perspektivische Sicht auf einen Ständer einer der Motoreinheiten mit Wicklungen ohne Polschuhe.

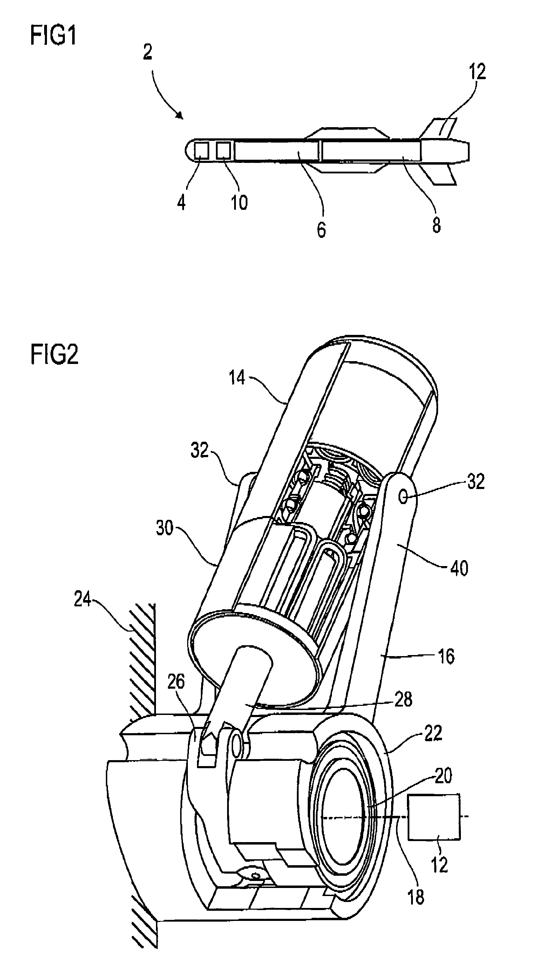

FIG 1 zeigt einen Lenkflugkörper 2 mit einem Suchkopf 4, einem Wirkteil 6 und einem Raketentriebwerk 8. Der Suchkopf 4 ist mit einem Lenksystem 10 verbunden, dessen Elektronik aus optischen Informationen aus der Optik des Suchkopfs 4 Lenksignale zum Lenken des Lenkflugkörpers 2 erzeugt. Unter Verwendung der Lenksignale werden Lenkflügel 12 des Lenksystems 10 verstellt, sodass der Lenkflugkörper 2 bei seinem Flug durch die Luft gelenkt wird.

Die Anlenkung eines der Lenkflügel 12 ist in FIG 2 dargestellt. FIG 2 zeigt einen Spindelaktuator 14 des Lenksystems 10 an einer Aktionseinheit 16, die im dargestellten Ausführungsbeispiel ein Träger einer in FIG 2 nur schematisch angedeuteten Welle 18 des Lenkflügels 12 des Lenkflugkörpers 2 ist. Die Welle 18 ist in einer Aufnahme 20 gelagert, die in einem gehäusefesten Element 22 der Aktionseinheit 16 angeordnet ist, wobei gehäusefest in diesem Zusammenhang die unbewegliche Befestigung relativ zum Flugkörpergehäuse 24 beschreibt, das in FIG 2 nur schematisch angedeutet ist. Die Aufnahme 20 ist drehbar im gehäusefesten Element 22 angeordnet und unbeweglich an einem Hebel 26 befestigt, der wiederum an einem Ansteuerelement 28 des Spindelaktuators 14 befestigt ist. Das Ansteuerelement 28 ist axial beweglich zu einem Gehäuse 30 des Spindelaktuators 14 und ist als Schubstange 72 mit einer vorderen Befestigungseinheit zur Befestigung am Hebel 26 ausgeführt.

Bei einer Betätigung des Spindelaktuators 14 wird das Ansteuerelement 28 in axialer Richtung aus dem Gehäuse 30 herausgeschoben oder eingezogen und dreht auf diese Weise den Hebel 26, der sich auf einer Kreisbahn um die Drehachse der Welle 18 des Lenkflügels 12 bewegt. Hierdurch wird auch der Lenkflügel 12 in seiner Position gedreht, sodass der Lenkflugkörper 2 in seinem Flug gelenkt wird. Durch die Drehbewegung des Hebels 26 wird die Achse des Ansteuerelements 28 trotz der an sich geradlinigen Translationsbewegung des Ansteuerelements 28 etwas verkippt. Um diese Verkippung zuzulassen, ist der Spindelaktuator 14 in zwei Drehlagern 32 der Aktionseinheit 16 gelagert, wobei die Rotationsachse des Drehlagers 32 senkrecht zur Achse des Ansteuerelements 28 ausgerichtet ist. Hierdurch kann der Spindelaktuator 14 ein durch die Drehbewegung des Hebels 26 bewirktes Verkippen leicht nachvollziehen.

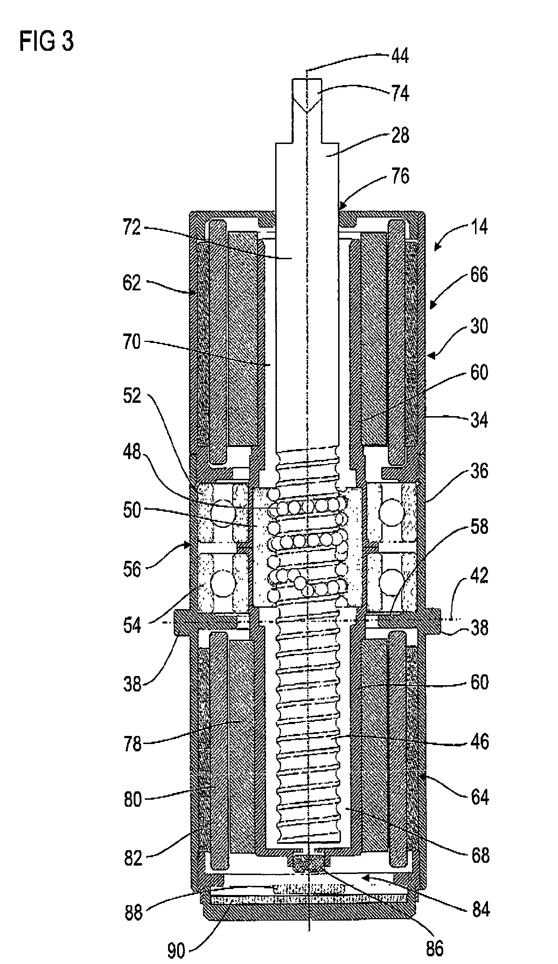

Die inneren Elemente des Spindelaktuators 14 sind in FIG 3 in einem Längsschnitt durch den Spindelaktuator 14 dargestellt. Das Gehäuse 30 des Spindelaktuators 14 umfasst zwei Gehäuseteile 34, 36, die ineinander gesteckt sind. Am hinteren Gehäuseteil 36 sind zwei als Aufnahmezapfen ausgeführte Befestigungsmittel 38 angeordnet, die jeweils Teil des Drehlagers 32 sind und in einer Ausnehmung der beiden Haltehebel 40 der Aktionseinheit 16 angeordnet sind. Durch diese Aufnahmezapfen ist der Spindelaktuator 14 um die Drehachse 42 rotierbar. Die Drehachse 42 steht senkrecht zu einer Spindelachse 44 einer Spindel 46. Die Spindel 46 ist einstückig gefertigt mit dem Ansteuerelement 28, das als Schubstange ohne Gewinde ausgeführt ist. Im Spindelbereich trägt die Spindel 46 ein Gewinde, das zum Aufnehmen von Kugeln 48 vorbereitet ist. Diese Kugeln 48 greifen in das Außengewinde der Spindel 46 und ein Innengewinde einer Spindelmutter 50 ein, die als Kugelumlaufmutter ausgeführt ist.

Radial direkt außerhalb der Spindelmutter 50 sind zwei Lagereinheiten 52, 54 eines Spindellagers 56 angeordnet, das die Spindelmutter 50 im Gehäuse 30 lagert. Beide Lagereinheiten 52, 54 sind als Schrägschulterlager ausgeführt und so zueinander angeordnet, dass sie ein X-Lager für die Spindelmutter 50 bilden. Dieses Lager 56 ist sehr tolerant gegen ein Verkippen der Spindel 46 relativ zur Gehäuseachse des Gehäuses 30, sodass ein solches Verkippen nur ein geringes Verkippmoment vom Spindellager 56 auf die Spindelmutter 50 ausübt.

Direkt unmittelbar neben dem Spindellager 56 sind die Befestigungsmittel 38 beziehungsweise Aufnahmezapfen als Verlängerung einer nach innen ragenden Gehäuseversteifung 58 ausgeführt, die als Innenrippe ausgeführt ist. Zur leichteren Montierbarkeit sind beide Lagereinheiten 52, 54 an der gleichen Seite der Innenrippe angeordnet, sodass beide Lagereinheiten 52, 54 von einer Seite und gleichzeitig verspannt werden können. Die Lagereinheiten 52, 54 sind als Kugellager ausgeführt mit einer äußeren Lagerschale, die gehäusefest und unmittelbar am Gehäuse 30 von innen anliegt. Der innere und zum Gehäuse 30 bewegliche Lagerring liegt an einem Tubus 60 an, der die Hohlwelle einer Motoreinheit 62, 64 ist. Vorderer und hinterer Hohlwellenteil beziehungsweise Tubus 60 bilden einen Gesamttubus bzw. eine Hohlwelle, in der die Spindelmutter 50 gelagert ist. Die Spindelmutter 50 ist also über die Hohlwelle an den inneren Lagerschalen des Spindellagers 56 befestigt und mit diesen rotierbar.

Die beiden Motoreinheiten 62, 64 sind jeweils Teil eines Motors 66, der als Hohlwellenmotor ausgeführt ist. Hierbei sind beide Motoreinheiten 62, 64 jeweils ergänzende Hohlwellenmotoreinheiten, die auf jeweils einem eigenen Hohlwellenteil aufgebracht sind. Die Hohlwellenteile 60 bilden hierbei Innengehäuse, die einen Innenraum 68, 70 umschließen, in die die Spindel 46 eingeführt ist.

FIG 3 zeigt die Spindel 46 in einem maximal eingefahrenen Zustand, bei dem der hintere Teil der Spindel 46 den hinteren Innenraum 68 im Wesentlichen vollständig durchgreift. Der vordere Teil der Spindel 46 ragt in den vorderen Innenraum 70 und durchgreift auch diesen mit der Schubstange 72. Die Spindel 46 ist rotierbar und axial beweglich in der Spindelmutter 50 gehalten und außerdem in einer Ankopplung 74 an dem Ruder-Hebel 26 rotationsfest gehalten. Eine Drehung der Spindelmutter 50 bewirkt somit, dass die Spindelmutter 50 um die Spindel 46 herumgeschraubt wird, wobei sich die Spindel 46 nicht selbst dreht, sondern nur axial, also in der Richtung der Spindelachse 44, bewegt. Hierbei fährt die Schubstange 72 durch ein Gleitlager 76 am vorderen Ende des Gehäuses 30. Dieses Gleitlager 76 bildet eine Öffnung des Gehäuses 30, durch das die Schubstange 72 hindurchgeführt ist, und schließt das vordere Ende des Gehäuses 30 bei hindurch geführter Schubstange 72 staubdicht nach außen ab. Hierdurch ist der Innenraum des Gehäuses 30 und vor allem die Spindelmutter 50 vor äußeren Einflüssen geschützt, insbesondere die in ihr gelagerten Kugeln 48.

Die beiden Motoreinheiten 62, 64 sind als bürstenlose Gleichstrommotoren ausgeführt, und zwar als dauermagneterregte Synchronmotoren. Diese umfassen jeweils einen Läufer 78, der mit Permanentmagneten bestückt ist und an jeweils einem Innengehäuse 60 befestigt ist. Der Ständer 80 ist über ein Lagerelement 82 am Gehäuse 30 befestigt und trägt eine oder mehrere Wicklungen, die über einen Stromrichter mit Gleichstrom geschaltet werden. Die Läufer 78 des Motors 66 treiben die Spindelmutter 50 über die beiden Innengehäuse 60 an und bewegen somit die Spindel 46 in axialer Richtung.

Die beiden Motoreinheiten 62, 64 sind symmetrisch zur Spindelmutter 50 angeordnet, wobei ihr Abstand der Läufer 78 und ihr gesamtes Läufergewicht symmetrisch um die Spindelmutter 50 verteilt sind. Durch die seitliche Anordnung der Motoreinheiten 62, 64 relativ zur Spindelmutter 50 beziehungsweise zum Spindellager 56 wirkt sich eine thermische Ausdehnung der Motoreinheiten 62, 64 nicht auf die Position der Spindelmutter 50 aus. Lediglich der Innenraum 68, 70 wird durch Erwärmung verlängert. Da außerdem die Befestigungsmittel 38 innerhalb der beiden Motoreinheiten 62, 64 angeordnet sind, ist auch die Position der Spindelmutter 50 relativ zur Lage der Drehachse 42 unabhängig von einer Temperaturausdehnung der Motoreinheiten 62, 64.

Da das Spindellager 56 sehr nahe an der Drehachse 42 liegt, wird eine Rotation des Spindelaktuators 14 um die Drehachse 42 nur zu einem sehr geringen Moment auf die Spindelmutter 50 führen. Dieses Moment wird ein Stück weit durch das Gleitlager 76 aufgefangen, das das Gehäuse 30 entlang der Spindel 46 beziehungsweise Schubstange 72 der Spindel 46 führt. Ein Restmoment auf die Spindelmutter 50 wird durch die X-Lagerung der Spindelmutter 50 im Spindellager 46 weich aufgefangen, sodass das resultierende Restmoment auf die Spindelmutter 50 minimal ist.

Die Ruderwinkel der Lenkflügel 12 des Lenksystems 10 müssen sehr genau eingestellt werden. Bei der Bauart des Motors 66 wie im Ausführungsbeispiel kommt außerdem hinzu, dass die Rotorposition für die Kommutierung und Regelung des Motors 66 genau bekannt sein muss. Um dies zu erreichen ist am hinteren Ende des Läufergehäuses des Motors 66 ein Rotationssensor 84 angeordnet. Er enthält einen Winkelgeber 86, der im gezeigten Ausführungsbeispiel ais Magnetwinkelgeber ausgeführt ist. Alternativ kann er auch als optischer Winkelgeber oder mechanischer Winkelgeber ausgestaltet sein. Weiter umfasst der Rotationssensor 84 einen Winkelabtaster 88, der gehäusefest am hinteren Ende des Gehäuses 28 befestigt und gegenüber dem Winkelgeber 86 angeordnet ist. Winkelgeber 86 und Winkelabtaster 88 liegen in der Spindelachse 44, die also durch die beiden Elemente 86, 88 hindurch führt.

Der Winkelabtaster 88 ist dazu ausgeführt, die Rotationslage des Winkelgebers 86 zu erkennen. Aus der Rotationslage kann eine an dem Winkelabtaster 88 angeschlossene Steuereinheit 90 auf die axiale Lage der Spindel 46 schließen, wenn der Gang, in dem die Spindel 46 und die Spindelmutter 50 angeordnet ist, bekannt ist. Zur Einstellung der Lage der Spindel 46 in der Spindelmutter 50 ist somit nur eine Grobjustierung nötig, die die Genauigkeit eines Gangs des Kugelgewindes der Spindel 46 haben muss. Anschließend wird die Stellung des Winkelgebers 86 zum Winkelabtaster 88 erfasst, woraus die Feinpositionierung der Spindel 46 ermittelt werden kann.

Die Winkelbestimmung des Lenkflügels 12 bzw. der axialen Lage der Spindel 46 erfolgt über den genau gemessenen Drehwinkel der Spindelmutter 50 und der Addition der Umdrehungen der Spindelmutter 50 bis zum aktuellen Gewindegang. Der Drehwinkel ist mit der Gewindesteigung zu multiplizieren, und zur Bestimmung der Ruderstellung ist das Übertragungsverhalten der Schubstange 72 auf die Ruderwelle 18 zu berücksichtigen. Der Rotationssensor 84 ist ein Absolutwinkelsensor, wodurch eine Kommutierung ohne Initialisierung möglich ist.

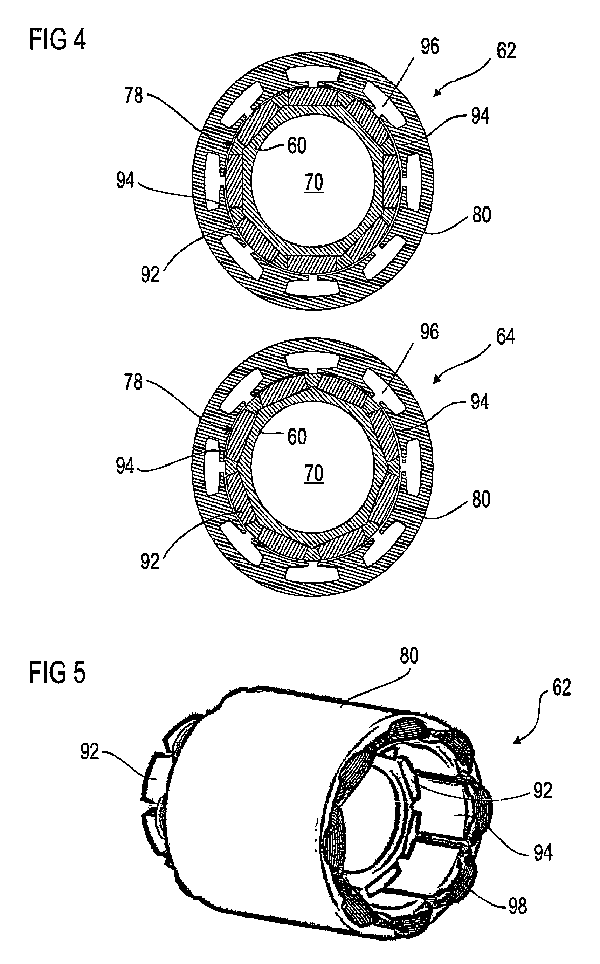

FIG 4 zeigt in seinem oberen Teil einen Querschnitt durch die Motoreinheit 62 mit ihrem Ständer 80, ihrem Läufer 78 und das den Innenraum 70 bildende tubusförmige Innengehäuse 60. Auf die Darstellung der Spindel 46 wurde in FIG 4 verzichtet. Der untere Teil aus FIG 4 zeigt den analogen Querschnitt durch die Motoreinheit 64. Deren Ständer 80 und Läufer 78 sind identische Bauteile, wie in der Motoreinheit 62, weshalb diese Bauteile mit den gleichen Bezugszeichen versehen sind, auch wenn es sich nur um die gleichen, nicht aber um die selben Bauteile handelt.

Beide Läufer 78 sind mit jeweils acht Permanentmagneten 92 bestückt, die nach radial außen weisen und abwechselnd entgegengesetzt magnetisiert sind. Jeder der Permanentmagnete 92 bildet einen Permanentmagnetpol, wobei zwei Permanentmagnete 92 jeweils ein Polpaar bilden. Entsprechend weisen die beiden Läufer 78 vier Polpaare und acht Magnetpole aus Permanentmagneten aus.

Beide Ständer 80 sind mit acht Polschuhen 94 und mit entsprechend acht Nuten 96 zwischen den Polschuhen 94 ausgeführt. In den Nuten 96 beziehungsweise um die Polschuhe 94 sind Wicklungen angeordnet, die in FIG 4 der Übersichtlichkeit halber nicht dargestellt sind. Die Permanentmagnete 92, Polschuhe 94 und Nuten 96 sind jeweils parallel zur Spindelachse 44 ausgerichtet und somit auch parallel zueinander. Die beiden Darstellungen aus FIG 4 zeigen die beiden Motoreinheiten 62, 64 zu einem Zeitpunkt, in dem zu sehen ist, dass durch die starre Kopplung der Läufer 78 über das Innengehäuse 60 die Läufer 78 der beiden Motoreinheiten 62, 64 um ein Viertel Polpaarteilung versetzt zueinander angeordnet sind. Während in der Motoreinheit 62 die Permanentmagnete 92 gegenüber und symmetrisch zu den Nuten 96 angeordnet sind, sind die Permanentmagnete 92 der Motoreinheit 64 genau gegenüber und mittig zu den Polschuhen 94 angeordnet. Bei der achtpoligen Aufteilung der Motoreinheiten 62, 64 sind die Läufer 78 also 22,5 Grad versetzt zueinander zum Ständer 80 angeordnet.

Die Polschuhe 94 und die Permanentmagnete 92 sind in ihrer Geometrie und Größe so zueinander angelegt, dass ihr Reluktanzmoment bei einer Drehung des Läufers 78 gegenüber dem unbestromten Ständer 80 sinusförmig verläuft. Da alle Permanentmagnete 92 jeweils einer Nut 96 im Ständer 80 fluchtend gegenüberliegen, entsteht also ein sehr starkes Nutrastmoment, da die sinusförmigen Reluktanzmomente aller Permanentmagnete 92 in Phase liegen. Entsprechend wäre die Motoreinheit 62 alleine nicht betreibbar, da Läufer 78 und Ständer 80 in einer wie im unteren Teil der FIG 4 gezeigten Relativstellung zueinander verharren würden. Das gleiche gilt für die Motoreinheit 64. Allerdings sind die sinusförmigen Verläufe der Reluktanzmomente der beiden Motoreinheiten 62, 64 exakt gespiegelt zueinander, so dass sie gegeneinander wirken. Durch die genaue Gegenphase und den Sinus-Verlauf verschwindet das Gesamt-Reluktanzmoment, sodass beide miteinander verbundenen Läufer 78 in ihrer Gesamtheit sehr ruhig laufen.

FIG 5 zeigt die Motoreinheit 62 in einer perspektivischen Darstellung, wobei jedoch der Läufer 78 der besseren Darstellung wegen ein Stück weit nach hinten aus dem Ständer 80 herausgerückt dargestellt ist, was natürlich bei einem Betrieb der Motoreinheit 62 nicht der Fall ist. Ebenfalls dargestellt ist die Wicklung 98 im Ständer 80, die im gezeigten Ausführungsbeispiel als Einzelpolwicklung ausgeführt ist. Jeder Pol trägt also eine eigene Wicklung 98, die ausschließlich um jeweils einen Polschuh 94 herumgewickelt ist.

Durch die Einzelpolwicklung kann das Herstellen des Ständers 80 sehr einfach erfolgen, da jede Wicklung nur um jeweils eine Polschuh 94 gelegt werden muss und nicht um mehrere Polschuhe 94, beispielsweise drei Polschuhe wie in normalen Gleichstrommotoren üblich. Auch sind die Wickelköpfe viel kompakter ausgeführt und viel einfacher zu formen, da jeder Wickelkopfteil eines Polschuhs einzeln ist und nicht mit anderen Wickelkopfteilen verbunden ist.

Jede der acht Wicklungen 98 wird von der Steuereinheit 90 im Betrieb des Motors 66 parallel angesteuert. Alle Wicklungen 98 werden also gleichphasig betrieben und mit gleicher Spannung beaufschlagt. Das Gleiche gilt für die Motoreinheit 64, wobei die Steuereinheit 90 diese Motoreinheit 64 jedoch zeitlich bzw. in der Phase versetzt zu der Motoreinheit 62 ansteuert. Auch die Ansteuerung der Motoreinheit 64 erfolgt einphasig, jedoch abwechselnd mit der Motoreinheit 62. Es wird also zunächst die Motoreinheit 62 einphasig angesteuert, dann pausiert und in der Pause die Motoreinheit 64 angesteuert. In einer Ansteuerungspause der Motoreinheit 64 wird wiederum die Motoreinheit 62 angesteuert. Es ist auch möglich, die jeweils einphasige Ansteuerung zeitlich überlappen zu lassen. Beides entspricht in der Gesamtheit einer zweiphasigen Ansteuerung des Motors 66, wobei die beiden Phasen jedoch getrennt auf die beiden Motoreinheiten 62, 64 verlegt sind.

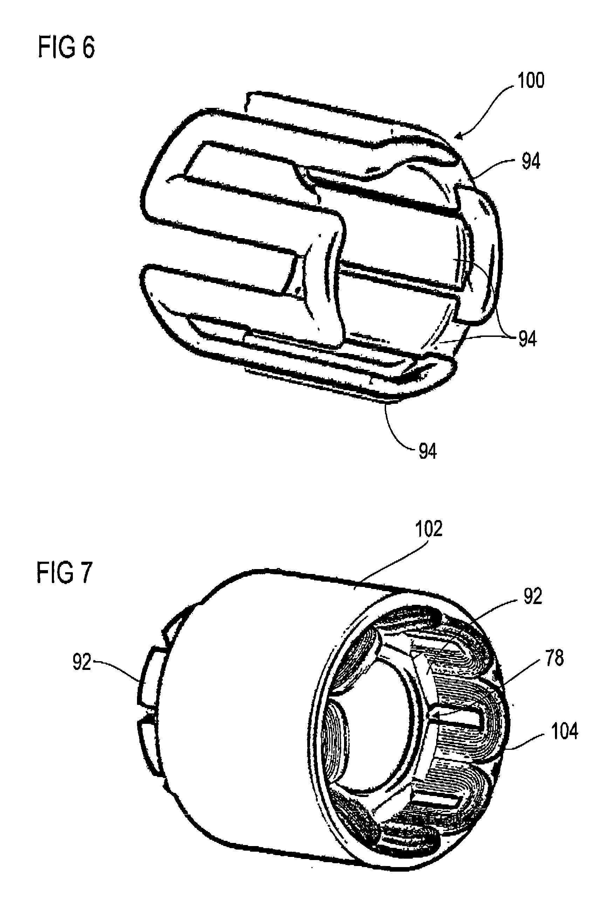

Eine alternative Wicklungsgestaltung ist in FIG 6 dargestellt. FIG 6 zeigt eine Mäanderwicklung 100, die um sämtliche acht Polschuhe 94 herumgeführt ist, wobei in FIG 6 der Übersichtlichkeit halber nur vier der acht Polschuhe 94 dargestellt sind. Die Mäanderwicklung 100 ist nur teilweise um die Polschuhe 94 geführt, wodurch der magnetische Fluss etwas geringer ist und damit auch die Leistung des Motors 66. Allerdings ist die Herstellung eines entsprechenden Motors 66 durch die Möglichkeit des Einschiebens der Mäanderwicklung zwischen dem Polschuh 94 sehr einfach und damit kostengünstig. Bei einem entsprechenden Motor 66 sind zweckmäßigerweise beide Motoreinheiten 62, 64 mit einer identischen Mäanderwicklung versehen, sodass sich die Motormomente der beiden Motoreinheiten 62, 64 identisch ergänzen.

Eine ebenfalls sehr einfache Herstellungsmöglichkeit ist in FIG 7 dargestellt. FIG 7 zeigt einen alternativen Ständer 102 um einen Rotor 78 wie in FIG 4 dargestellt. Der Ständer 102 ist polschuhlos ausgeführt, sodass jede einen Wicklungspol bildende Wicklung 104 nicht um einen Polschuhe 94, sondern um einen Hohlraum herum geführt ist. Bei dem in FIG 7 gezeigten Ausführungsbeispiel ist der Läufer 102 mit einer äußeren röhrenförmigen ferromagnetischen Einheit versehen, die durch ihre Rotationssymmetrie im Wesentlichen keine Reluktanzmomente erzeugt. Auch dies führt zu einer etwas reduzierten Motorleistung, die jedoch insbesondere bei einfachen Motoren in Kauf genommen werden kann, da der Vorteil einer deutlich höheren automatischen Vorfertigung zu erheblichen Kostenreduzierungen bei der Wicklung führen kann.

Bei allen gezeigten Ausführungsbeispielen können die Läufer 78 der beiden Motoreinheiten 62, 64 gleich ausgeführt sein. Lediglich die Wicklungen 98, 100, 104 können unterschiedlich ausgeführt sein, ebenso wie die Ständer 80, 102. Bei dem in FIG 7 gezeigten Ausführungsbeispiel ist die Wicklung 104 zwar eine Einzelpolwicklung, es sind jedoch auch andere Wicklungsformen denkbar. Allen Ausführungsbeispielen ist jedoch gemein, dass die Wicklungen 98, 100, 104 jeweils einpolig von der Steuereinheit 90 angesteuert werden. Bei zwei Motoreinheiten erfolgt die Ansteuerung entsprechend versetzt zweiphasig.

### Bezugszeichenliste

- 2: Lenkflugkörper
- 4: Suchkopf
- 6: Wirkteil
- 8: Raketentriebwerk
- 10: Lenksystem
- 12: Lenkflügel
- 14: Aktuator
- 16: Aktionseinheit
- 18: Welle
- 20: Aufnahme
- 22: Element
- 24: Flugkörpergehäuse
- 26: Hebel
- 28: Ansteuerelement
- 30: Gehäuse
- 32: Drehlager
- 34: Gehäuseteil
- 36: Gehäuseteil
- 38: Befestigungsmittel
- 40: Haltehebel
- 42: Drehachse
- 44: Spindelachse
- 46: Spindel
- 48: Kugel
- 50: Spindelmutter
- 52: Lagereinheit
- 54: Lagereinheit
- 56: Spindellagerung
- 58: Gehäuseversteifung
- 60: Welle
- 62: Motoreinheit
- 64: Motoreinheit
- 66: Gleichstrommotor
- 68: Innenraum
- 70: Innenraum
- 72: Schubstange
- 74: Ankopplung
- 76: Gleitlager
- 78: Läufer
- 80: Ständer
- 82: Lagerelement
- 84: Rotationssensor
- 86: Winkelgeber
- 88: Winkelabtaster
- 90: Steuereinheit
- 92: Permanentmagnet
- 94: Polschuh
- 96: Nut
- 98: Wicklung
- 100: Mäanderwicklung
- 102: Ständer
- 104: Wicklung

## Patentansprüche

1. Spindelaktuator (14) mit einem Gehäuse (30), einem Motor (66), einer axial beweglichen Spindel (46) und einer axial gehäusefesten Spindelmutter (50),
**dadurch gekennzeichnet,**
**dass** der Motor (66) ein einen Innenraum (68, 70) bildender Hohlwellenmotor ist und die Spindel (46) in den Innenraum (68, 70) einfahrbar ist.

2. Spindelaktuator (14) nach Anspruch 1,
**dadurch gekennzeichnet,**
**dass** die Spindelmutter (50) innerhalb des Gehäuses (30) angeordnet ist.

3. Spindelaktuator (14) nach Anspruch 1 oder 2,
**dadurch gekennzeichnet,**
**dass** das Gehäuse (30) eine nach außen abgeschlossene Einheit bildet mit einer Öffnung, durch die eine an der Spindel (46) befestige Schubstange (72) geführt ist, die die Öffnung staubdicht abdichtet.

4. Spindelaktuator (14) nach einem der vorhergehenden Ansprüche,
**dadurch gekennzeichnet,**
**dass** der Motor (66) zwei Motoreinheiten (62, 64) aufweist und die Spindelmutter (50) axial zwischen den beiden Motoreinheiten (62, 64) angeordnet ist.

5. Spindelaktuator (14) nach Anspruch 4,
**dadurch gekennzeichnet,**
**dass** die Spindelmutter in einem Spindellager gelagert ist, und die beiden Motoreinheiten mit dem Spindellager einen Tubus um die Spindel bilden.

6. Spindelaktuator (14) nach Anspruch 4 oder 5,
**dadurch gekennzeichnet,**
**dass** beide Motoreinheiten Hohlwelleneinheiten sind und die Spindel stets durch den Hohlraum der vorderen Motoreinheit verläuft und je nach Spindelhub mehr oder weniger tief in den Hohlraum der hinteren Motoreinheit reicht.

7. Spindelaktuator (14) nach einem der vorhergehenden Ansprüche,
**dadurch gekennzeichnet,**
**dass** die Spindelmutter von radial außerhalb von einem Tubus gehalten ist, der ein Innengehäuse eines Läufers des Motors bildet.

8. Spindelaktuator nach einem der vorhergehenden Ansprüche,
**dadurch gekennzeichnet,**
**dass** die Spindelmutter (50) in einem Spindellager (56) gelagert ist, das als X-Lager ausgeführt ist.

9. Spindelaktuator nach einem der vorhergehenden Ansprüche,
**dadurch gekennzeichnet,**
**dass** die Spindel (46) vorne eine Schubstange (72) aufweist, die in einem Gleitlager (76) durch das Gehäuse (30) geführt ist.

10. Spindelaktuator nach einem der vorhergehenden Ansprüche,
**dadurch gekennzeichnet,**
**dass** das Gehäuse (30) ein Befestigungsmittel (38) zum Befestigen des Gehäuses (30) an einer externen Halterung (16) aufweist und das Befestigungsmittel (38) axial maximal 25% der Gehäuselänge von der Spindelmutter (50) entfernt angeordnet ist.

11. Spindelaktuator (14) nach Anspruch 10,
**dadurch gekennzeichnet,**
**dass** das Befestigungsmittel (38) axial in Höhe einer nach innen ragenden Gehäuseversteifung (58) angeordnet ist.

12. Spindelaktuator (14) nach Anspruch 10 oder 11,
**dadurch gekennzeichnet,**
**dass** das Befestigungsmittel (38) als Teil eines Drehlagers (32) ausgestaltet ist.

13. Spindelaktuator (14) nach einem der vorhergehenden Ansprüche,
**dadurch gekennzeichnet,**
**dass** der Innenraum (68, 70) von einem Läufergehäuse (60) des Motors (66) umgeben ist, an dessen axial hinteren Ende ein Rotationssensor (84) befestigt ist.

14. Spindelaktuator (14) nach Anspruch 13,
**dadurch gekennzeichnet,**
**dass** ein Magnetwinkelgeber (86) des Rotationssensors (84) am Läufergehäuse (60) befestigt und ein Winkelabtaster (88) des Rotationssensors (84) gehäusefest gegenüber dem Magnetwinkelgeber (86) angeordnet ist.

15. Lenkflugkörper (2) mit einem Lenksystem (10) mit einem Lenkflügel (12) und einem Betätigungsmechanismus zum Bewegen des Lenkflügels (12), der einen Spindelaktuator (14) nach einem der vorhergehenden Ansprüche aufweist.
